# EUROPÄISCHE PATENTANMELDUNG

(11) **EP 3 928 893 A1**
(43) Veröffentlichungstag der Anmeldung: **29.12.2021**
(21) Anmeldenummer: 20181944.8
(22) Anmeldetag: 24.06.2020
(51) Int. Cl.: B22F 3/02, B22F 3/10, B22F 7/06, B22F 7/08, B23D 61/04, B24D 5/06, B24D 5/12, B24D 7/06, B24D 18/00, B24D 99/00, B28D 1/04, B28D 1/12, B23B 51/04, B23P 15/28, B22F 5/00

(54) **VERFAHREN ZUR HERSTELLUNG EINES BEARBEITUNGSSEGMENTES MIT EINEM ÜBERSTAND DER HARTSTOFFPARTIKEL AN DER OBERSEITE**

(71) Anmelder: Hilti Aktiengesellschaft, 9494 Schaan (LI)
(72) Erfinder: Britt, Thomas, 8890 Flums (CH); Stracke, Jens, 6800 Feldkirch (AT); Hoop, Matthaeus, 9492 Eschen (LI); Szabó, József, 6000 KECSKEMÉT (HU)
(74) Vertreter: Hilti Aktiengesellschaft Corporate Intellectual Property

(57) **Zusammenfassung**

Verfahren zur Herstellung eines Bearbeitungssegmentes (51) für ein Bearbeitungswerkzeug aus einem pulver- oder granulatförmigen ersten Matrixwerkstoff (56) und ersten Hartstoffpartikeln (57), die gemäß einem definierten Partikelmuster angeordnet werden, wobei das Bearbeitungssegment mit einer Unterseite (61) mit einem Grundkörper des Bearbeitungswerkzeuges verbunden wird. Das Bearbeitungssegment (51) weist an einer der Unterseite (61) gegenüber liegenden Oberseite (62) einen Überstand (Δ) der ersten Hartstoffpartikel (57) auf.

## Beschreibung

### Technisches Gebiet

Die vorliegende Erfindung betrifft ein Verfahren zur Herstellung eines Bearbeitungssegmentes gemäß dem Oberbegriff des Anspruchs 1.

### Stand der Technik

Bearbeitungswerkzeuge, wie Kernbohrkronen, Sägeblätter, Abtragscheiben und Trennschleifketten, umfassen Bearbeitungssegmente, die an einem rohr-, scheiben- oder ringförmigen Grundkörper befestigt werden, wobei die Bearbeitungssegmente durch Schweißen, Löten oder Kleben mit dem Grundkörper verbunden werden. Abhängig vom Bearbeitungsverfahren des Bearbeitungswerkzeugs werden Bearbeitungssegmente, die zum Kernbohren eingesetzt werden, als Bohrsegmente, Bearbeitungssegmente, die zum Sägen eingesetzt werden, als Sägesegmente, Bearbeitungssegmente, die zum Abtragen eingesetzt werden, als Abtragsegmente und Bearbeitungssegmente, die zum Trennschleifen eingesetzt werden, als Trennschleifsegmente bezeichnet.

Bearbeitungssegmente für Kernbohrkronen, Sägeblätter, Abtragscheiben und Trennschleifketten werden aus einem Matrixwerkstoff und Hartstoffpartikeln hergestellt, wobei die Hartstoffpartikel statistisch verteilt vorliegen können oder gemäß einem definierten Partikelmuster im Matrixwerkstoff angeordnet sind. Bei Bearbeitungssegmenten mit statistisch verteilten Hartstoffpartikeln werden der Matrixwerkstoff und die Hartstoffpartikel gemischt, die Mischung wird in eine passende Werkzeugform eingefüllt und zum Bearbeitungssegment weiterverarbeitet. Bei Bearbeitungssegmenten mit definiert angeordneten Hartstoffpartikeln wird ein Grünling schichtweise aus Matrixwerkstoff aufgebaut, in den die Hartstoffpartikel gemäß dem definierten Partikelmuster angeordnet werden. Bei Bearbeitungssegmenten, die mit dem Grundkörper des Bearbeitungswerkzeuges verschweißt werden sollen, hat sich der Aufbau aus einer Bearbeitungszone und einer Neutralzone bewährt, da einige Kombinationen aus Matrixwerkstoff und Grundkörper nicht schweißbar sind. Die Bearbeitungszone wird aus einem ersten Matrixwerkstoff und die Neutralzone aus einem zweiten Matrixwerkstoff, der vom ersten Matrixwerkstoff verschieden und mit dem Grundkörper schweißbar ist, aufgebaut.

Bearbeitungswerkzeuge, die als Kernbohrkrone, Sägeblatt, Abtragscheibe oder Trennschleifkette ausgebildet sind und für die Nassbearbeitung von Betonwerkstoffen vorgesehen sind, sind für die Trockenbearbeitung von Betonwerkstoffen nur bedingt geeignet. Bei der Nassbearbeitung von Betonwerkstoffen entsteht ein abrasiver Betonschlamm, der den Bearbeitungsprozess unterstützt und zu einem Selbstschärfen der Bearbeitungssegmente während der Bearbeitung führt. Der Matrixwerkstoff wird durch den abrasiven Betonschlamm abgetragen und neue Hartstoffpartikel werden freigelegt. Bei der Trockenbearbeitung von Betonwerkstoffen kann sich kein abrasiver Betonschlamm bilden, der den Bearbeitungsprozess unterstützen kann. Die Hartstoffpartikel werden schnell stumpf und die Bearbeitungsrate sinkt. Durch den fehlenden Betonschlamm verschleißt der Matrixwerkstoff zu langsam und tiefer liegende Hartstoffpartikel können nicht freigelegt werden.

Für die Trockenbearbeitung von Betonwerkstoffen sind Bearbeitungssegmente erforderlich, bei denen die ersten Hartstoffpartikel an der Oberseite einen Überstand gegenüber dem ersten Matrixwerkstoff aufweisen. Dabei gilt, dass die Bearbeitungsrate, die mit dem Bearbeitungssegment erzielt werden kann, umso höher ist, je grösser der Überstand der ersten Hartstoffpartikel ist. Die europäische Patentanmeldung EP 3 670 041 betrifft ein Verfahren zur Herstellung eines Bearbeitungssegmentes aus einem ersten Matrixwerkstoff und ersten Hartstoffpartikeln, die gemäß einem definierten ersten Partikelmuster angeordnet werden. Das Verfahren zeichnet sich dadurch aus, dass ein Grünling hergestellt wird, bei dem die ersten Hartstoffpartikel an der Oberseite einen Überstand gegenüber dem ersten Matrixwerkstoff aufweisen. Der Grünling wird mit einem speziellen Pressstempel weiterverarbeitet, welcher in einer Pressfläche Vertiefungen aufweist, wobei die Anordnung der Vertiefungen dem definierten ersten Partikelmuster der ersten Hartstoffpartikel entspricht.

Das bekannte Verfahren zur Herstellung eines Bearbeitungssegmentes weist den Nachteil auf, dass für die Weiterverarbeitung des Grünlings zum Bearbeitungssegment ein spezieller Pressstempel mit Vertiefungen in der Pressfläche erforderlich ist, der beim Verdichten oder beim Heißpressen verwendet wird. Für jedes definierte erste Partikelmuster, gemäß dem die ersten Hartstoffpartikel angeordnet werden, ist ein spezieller Pressstempel erforderlich.

### Darstellung der Erfindung

Die Aufgabe der vorliegenden Erfindung besteht in der Entwicklung eines Verfahrens zur Herstellung eines Bearbeitungssegmentes zu entwickeln, bei dem die Bearbeitungssegmente an der Oberseite einen Überstand der Hartstoffpartikel aufweisen. Dabei sollen sowohl bei der Herstellung des Grünlings als auch bei der Weiterverarbeitung des Grünlings in das Bearbeitungssegment herkömmliche Werkzeugkomponenten verwendet werden; der Einsatz von speziellen Werkzeugkomponenten soll vermieden werden.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zur Herstellung eines Bearbeitungssegmentes aus einem pulver- oder granulatförmigen ersten Matrixwerkstoff und ersten Hartstoffpartikeln, die gemäß einem definierten ersten Partikelmuster angeordnet werden, ist erfindungsgemäß dadurch gekennzeichnet, dass beim Verdichten des Grünlings zwischen dem zweiten Pressstempel und dem Grünling eine Folie aus einem Folienmaterial angeordnet wird, wobei das Folienmaterial eine Härte aufweist, die geringer als die Härte des ersten Matrixwerkstoffes ist.

Bearbeitungssegmente, die mit dem erfindungsgemäßen Verfahren hergestellt werden, werden in einem dreistufigen Verfahren hergestellt: In einer ersten Stufe wird ein Grünling aus einem ersten Matrixwerkstoff und ersten Hartstoffpartikeln aufgebaut, wobei die ersten Hartstoffpartikel gemäß einem definierten Partikelmuster im ersten Matrixwerkstoff angeordnet werden, in einer zweiten Stufe wird der Grünling unter Druckeinwirkung zu einem Pressling verdichtet und in einer dritten Stufe wird der Pressling unter Temperatureinwirkung zum Bearbeitungssegment weiterverarbeitet.

Bearbeitungssegmente, die mittels des erfindungsgemäßen Verfahrens zur Herstellung eines Bearbeitungssegmentes hergestellt werden, weisen an der Oberseite einen Überstand der ersten Hartstoffpartikel gegenüber dem ersten Matrixwerkstoff auf. Das erfindungsgemäße Verfahren zur Herstellung eines Bearbeitungssegmentes zeichnet sich dadurch aus, dass eine Folie aus einem Folienmaterial verwendet wird, dessen Härte geringer als die Härte des ersten Matrixwerkstoffes ist. Beim Verdichten des Grünlings wird die Oberseite des Grünlings mit dem Folienmaterial bedeckt, so dass beim Verdichten zwischen einem ersten Pressstempel, der die Unterseite formt, und einem zweiten Pressstempel, der die Oberseite formt, die ersten Hartstoffpartikel abgedeckt sind. Als zweiter Pressstempel kann ein herkömmlicher Pressstempel verwendet werden; es ist kein spezieller Pressstempel mit Vertiefungen in der Pressfläche erforderlich.

In einer ersten Ausführungsform werden die ersten Hartstoffpartikel beim Aufbau des Grünlings an der Oberseite mit einem Überstand gegenüber dem ersten Matrixwerkstoff angeordnet. Die Folie, die zwischen dem zweiten Pressstempel und dem Grünling verwendet wird, verhindert, dass der Überstand der ersten Hartstoffpartikel beim Verdichten entfernt wird und die ersten Hartstoffpartikel in den ersten Matrixwerkstoff verschoben werden.

Bevorzugt wird für die Folie eine Schichtdicke ausgewählt, die grösser als der Überstand der ersten Hartstoffpartikel gegenüber dem ersten Matrixwerkstoff ist. Bei einer Folie mit einer Schichtdicke, die grösser als der Überstand der ersten Hartstoffpartikel ist, bleibt der Überstand der ersten Hartstoffpartikel gegenüber dem ersten Matrixwerkstoff erhalten.

In einer zweiten, alternativen Ausführungsform werden die ersten Hartstoffpartikel beim Aufbau des Grünlings an der Oberseite vollständig in den ersten Matrixwerkstoff eingebettet. Die Folie, die beim Verdichten des Grünlings zwischen dem zweiten Pressstempel und dem Grünling angeordnet wird, sorgt dafür, dass die ersten Hartstoffpartikel nach dem Verdichten an der Oberseite einen Überstand gegenüber dem ersten Matrixwerkstoff aufweisen.

In einer ersten Ausführungsform des Verfahrens wird die Folie nach dem Verdichten vom Pressling entfernt. Wenn die Folie nach dem Verdichten vom Pressling entfernt wird, erfolgt die Weiterverarbeitung des Presslings in das Bearbeitungssegment durch Freiformsintern ohne weitere Formgebung.

In einer zweiten, alternativen Ausführungsform des Verfahrens wird der Pressling mit der Folie zum Bearbeitungssegment weiterverarbeitet. Wenn der Pressling mit der Folie zum Bearbeitungssegment weiterverarbeitet wird, bestimmen die Eigenschaften des Folienmaterials, insbesondere die Schmelztemperatur und der Flammpunkt, das Verhalten des Folienmaterials bei der Weiterverarbeitung.

In einer ersten Variante wird das Folienmaterial so ausgewählt, dass die Schmelztemperatur des Folienmaterials niedriger als die Sintertemperatur des ersten Matrixwerkstoffes ist. Wenn die Schmelztemperatur des Folienmaterials niedriger als die Sintertemperatur des ersten Matrixwerkstoffes ist, verändert das Folienmaterial beim Aufheizen seinen Zustand und verflüssigt sich, bevor der erste Matrixwerkstoff versintert. Das flüssige Folienmaterial verteilt sich während des Sinterprozesses im ersten Matrixwerkstoff und kann den Sintervorgang als Infiltrat unterstützen.

In einer zweiten Variante wird das Folienmaterial so ausgewählt, dass der Flammpunkt des Folienmaterials niedriger als die Sintertemperatur des ersten Matrixwerkstoffes ist. Wenn der Flammpunkt des Folienmaterials niedriger als die Sintertemperatur des ersten Matrixwerkstoffes ist, verändert das Folienmaterial beim Aufheizen seinen Zustand und verdampft, bevor der erste Matrixwerkstoff versintert.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: zwei Varianten eines als Kernbohrkrone ausgebildeten Bearbeitungswerkzeuges;
- FIGN. 2A, B: zwei Varianten eines als Sägeblatt ausgebildeten Bearbeitungswerkzeuges;
- FIG. 3: ein als Abtragscheibe ausgebildetes Bearbeitungswerkzeug;
- FIG. 4: ein als Trennschleifkette ausgebildetes Bearbeitungswerkzeug;
- FIGN. 5A-C: ein Bearbeitungssegment, das mittels eines erfindungsgemäßen Verfahrens hergestellt wurde, bei dem ein Grünling (FIG. 5A) zu einem Pressling (FIG. 5B) verdichtet und zum Bearbeitungssegment (FIG. 5C) weiterverarbeitet wird; und
- FIGN. 6A-C: ein Bearbeitungssegment, das mittels eines erfindungsgemäßen Verfahrens hergestellt wurde, bei dem ein Grünling (FIG. 6A) zu einem Pressling (FIG. 6B) verdichtet und zum Bearbeitungssegment (FIG. 6C) weiterverarbeitet wird.

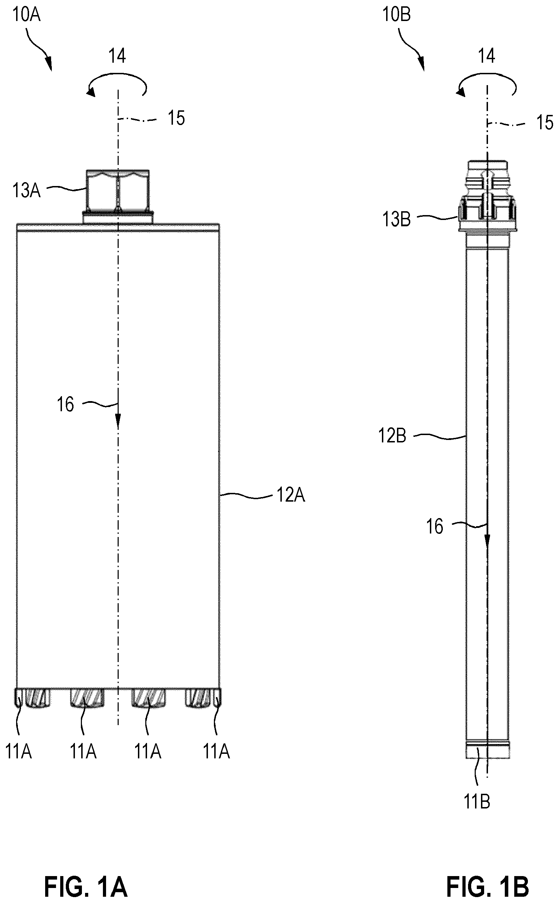

**FIGN. 1A****, B** zeigen zwei Varianten eines als Kernbohrkrone **10A, 10B** ausgebildeten Bearbeitungswerkzeuges. Die in FIG. 1A dargestellte Kernbohrkrone 10A wird im Weiteren als erste Kernbohrkrone und die in FIG. 1B dargestellte Kernbohrkrone 10B als zweite Kernbohrkrone bezeichnet, ausserdem werden die erste und zweite Kernbohrkrone 10A, 10B unter dem Begriff "Kernbohrkrone" zusammengefasst.

Die erste Kernbohrkrone 10A umfasst mehrere Bearbeitungssegmente **11A**, einen rohrförmig ausgebildeten Grundkörper **12A** und eine Werkzeugaufnahme **13A.** Die Bearbeitungssegmente 11A, die zum Kernbohren eingesetzt werden, werden auch als Bohrsegmente bezeichnet und der rohrförmig ausgebildete Grundkörper 12A wird auch als Bohrschaft bezeichnet. Die Bohrsegmente 11A sind fest mit dem Bohrschaft 12A verbunden, beispielsweise durch Schrauben, Kleben, Löten oder Schweißen.

Die zweite Kernbohrkrone 10B umfasst ein ringförmiges Bearbeitungssegment **11B**, einen rohrförmig ausgebildeten Grundkörper **12B** und eine Werkzeugaufnahme **13B.** Das ringförmige Bearbeitungssegment **11B**, das zum Kernbohren eingesetzt wird, wird auch als Bohrring bezeichnet und der rohrförmig ausgebildete Grundkörper 12B wird auch als Bohrschaft bezeichnet. Der Bohrring 11B ist fest mit dem Bohrschaft 12B verbunden, beispielsweise durch Schrauben, Kleben, Löten oder Schweißen.

Die Kernbohrkrone 10A, 10B wird über die Werkzeugaufnahme 13A, 13B mit einem Kernbohrgerät verbunden und im Bohrbetrieb vom Kernbohrgerät in einer Drehrichtung **14** um eine Drehachse **15** angetrieben. Während der Drehung der Kernbohrkrone 10A, 10B um die Drehachse 15 wird die Kernbohrkrone 10A, 10B entlang einer Vorschubrichtung **16** in ein zu bearbeitendes Werkstück bewegt, wobei die Vorschubrichtung 16 parallel zur Drehachse 15 verläuft. Die Kernbohrkrone 10A, 10B erzeugt im zu bearbeitenden Werkstück einen Bohrkern und ein Bohrloch.

Der Bohrschaft 12A, 12B ist im Ausführungsbeispiel der FIGN. 1A, B einteilig ausgebildet und die Bohrsegmente 11A bzw. der Bohrring 11B sind fest mit dem Bohrschaft 12A, 12B verbunden. Alternativ kann der Bohrschaft 12A, 12B zweiteilig aus einem ersten Bohrschaftabschnitt und einem zweiten Bohrschaftabschnitt ausgebildet sein, wobei die Bohrsegmente 11A bzw. der Bohrring 11B fest mit dem ersten Bohrschaftabschnitt und die Werkzeugaufnahme 13A, 13B fest mit dem zweiten Bohrschaftabschnitt verbunden ist. Der erste und zweite Bohrschaftabschnitt werden über eine lösbare Verbindungseinrichtung miteinander verbunden. Die lösbare Verbindungseinrichtung ist beispielsweise als Steck-Dreh-Verbindung, wie in EP 2 745 965 A1 oder EP 2 745 966 A1 beschrieben, ausgebildet. Die Ausbildung des Bohrschaftes als einteiliger oder zweiteiliger Bohrschaft hat keinen Einfluss auf den Aufbau der Bohrsegmente 11A bzw. des Bohrringes 11B.

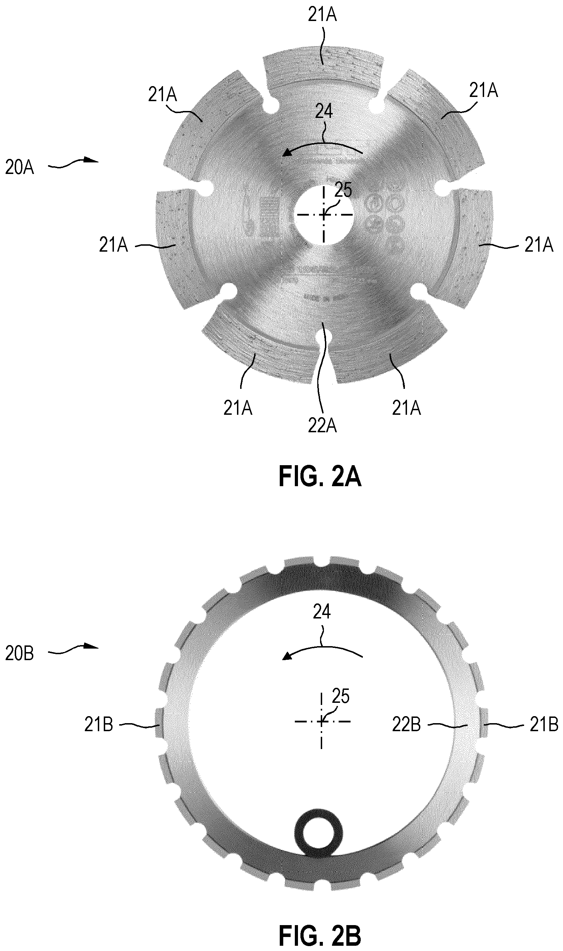

**FIGN. 2A****, B** zeigen zwei Varianten eines als Sägeblatt **20A, 20B** ausgebildeten Bearbeitungswerkzeuges. Das in FIG. 2A dargestellte Sägeblatt 20A wird im Weiteren als erstes Sägeblatt und das in FIG. 2B dargestellte Sägeblatt 20B als zweites Sägeblatt bezeichnet, ausserdem werden das erste und zweite Sägeblatt 20A, 20B unter dem Begriff "Sägeblatt" zusammengefasst.

Das erste Sägeblatt 20A umfasst mehrere Bearbeitungssegmente **21A,** einen scheibenförmig ausgebildeten Grundkörper **22A** und eine Werkzeugaufnahme. Die Bearbeitungssegmente 21A, die zum Sägen eingesetzt werden, werden auch als Sägesegmente bezeichnet und der scheibenförmig ausgebildete Grundkörper 22A wird auch als Stammblatt bezeichnet. Die Sägesegmente 21A sind fest mit dem Stammblatt 22A verbunden, beispielsweise durch Schrauben, Kleben, Löten oder Schweißen.

Das zweite Sägeblatt 20B umfasst mehrere Bearbeitungssegmente **21B**, einen ringförmig ausgebildeten Grundkörper **22B** und eine Werkzeugaufnahme. Die Bearbeitungssegmente 21B, die zum Sägen eingesetzt werden, werden auch als Sägesegmente bezeichnet und der ringförmig ausgebildete Grundkörper 22B wird auch als Ring bezeichnet. Die Sägesegmente 21B sind fest mit dem Ring 22B verbunden, beispielsweise durch Schrauben, Kleben, Löten oder Schweißen.

Das Sägeblatt 20A, 20B wird über die Werkzeugaufnahme mit einer Säge verbunden und im Sägebetrieb von der Säge in einer Drehrichtung **24** um eine Drehachse **25** angetrieben. Während der Drehung des Sägeblattes 20A, 20B um die Drehachse 25 wird das Sägeblatt 20A, 20B entlang einer Vorschubrichtung bewegt, wobei die Vorschubrichtung parallel zur Längsebene des Sägeblattes 20A, 20B verläuft. Das Sägeblatt 20A, 20B erzeugt im zu bearbeitenden Werkstück einen Sägeschlitz.

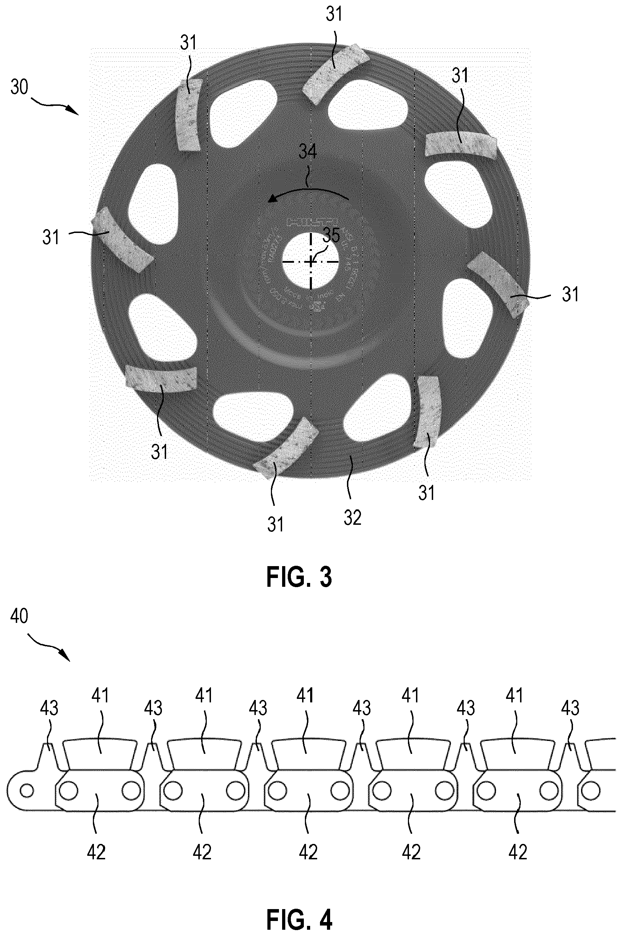

**FIG. 3** zeigt ein als Abtragscheibe **30** ausgebildetes Bearbeitungswerkzeug. Die Abtragscheibe 30 umfasst mehrere Bearbeitungssegmente **31,** einen Grundkörper **32** und eine Werkzeugaufnahme. Die Bearbeitungssegmente 31, die zum Abtragen eingesetzt werden, werden auch als Abtragsegmente bezeichnet und der scheibenförmig ausgebildete Grundkörper 32 wird auch als Topf bezeichnet. Die Abtragsegmente 31 sind fest mit dem Topf 32 verbunden, beispielsweise durch Schrauben, Kleben, Löten oder Schweißen.

Die Abtragscheibe 30 wird über die Werkzeugaufnahme mit einem Werkzeuggerät verbunden und im Abtragbetrieb vom Werkzeuggerät in einer Drehrichtung **34** um eine Drehachse **35** angetrieben. Während der Drehung der Abtragscheibe 30 um die Drehachse 35 wird die Abtragscheibe 30 über ein zu bearbeitendes Werkstück bewegt, wobei die Bewegung der senkrecht zur Drehachse 35 verläuft. Die Abtragscheibe 30 entfernt die Oberfläche des zu bearbeitenden Werkstücks.

**FIG. 4** zeigt ein als Trennschleifkette **40** ausgebildetes Bearbeitungswerkzeug. Die Trennschleifkette 40 umfasst mehrere Bearbeitungssegmente **41,** mehrere gliedförmig ausgebildete Grundkörper **42** und mehrere Verbindungsglieder **43.** Die Bearbeitungssegmente 41, die zum Trennschleifen eingesetzt werden, werden auch als Trennschleifsegmente bezeichnet und die gliedförmig ausgebildeten Grundkörper 42 werden auch als Treibglieder bezeichnet.

Die Treibglieder 42 werden über die Verbindungsglieder 43 verbunden. Im Ausführungsbeispiel sind die Verbindungsglieder 43 über Nietbolzen mit den Treibgliedern 42 verbunden. Die Nietbolzen ermöglichen eine Drehung der Treibglieder 42 relativ zu den Verbindungsgliedern 43 um eine Drehachse, die durch das Zentrum der Nietbolzen verläuft. Die Bearbeitungssegmente 41 sind fest mit den Treibgliedern 42 verbunden, beispielsweise durch Schrauben, Kleben, Löten oder Schweißen.

Die Trennschleifkette 40 wird über eine Werkzeugaufnahme mit einem Werkzeuggerät verbunden und im Betrieb vom Werkzeuggerät in einer Drehrichtung angetrieben. Während der Drehung der Trennschleifkette 40 wird die Trennschleifkette 40 in ein zu bearbeitendes Werkstück bewegt.

Die Herstellung eines Bearbeitungssegmentes **51,** das an seiner Oberseite Hartstoffpartikel mit einem Überstand gegenüber dem Matrixwerkstoff aufweist, erfolgt mittels des erfindungsgemäßen Verfahrens zur Herstellung eines Bearbeitungssegmentes. In einer ersten Stufe wird ein Grünling **52** hergestellt, in einer zweiten Stufe wird der Grünling 52 zu einem Pressling **53** verdichtet und in einer dritten Stufe wird der Pressling 53 zum Bearbeitungssegment 51 weiterverarbeitet.

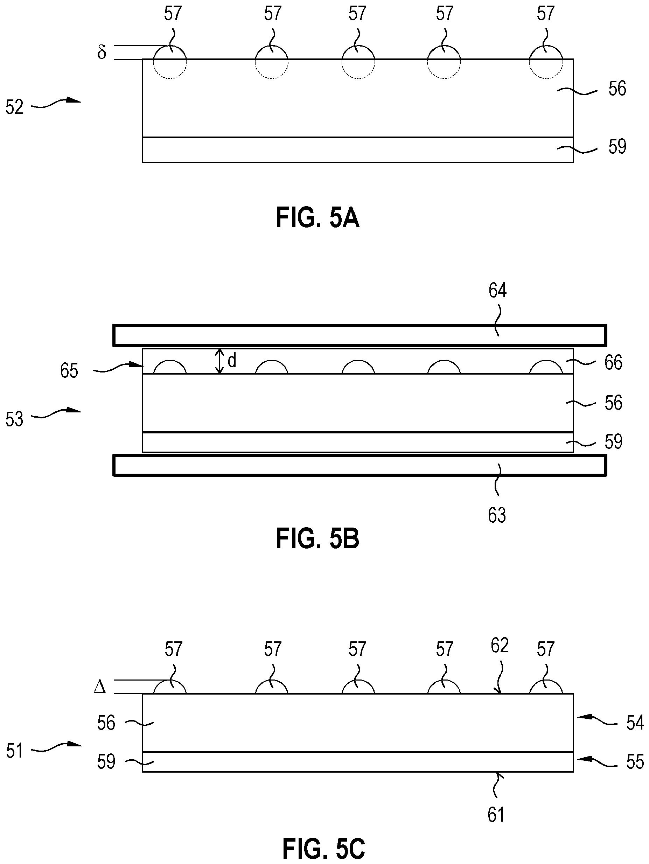

**FIGN. 5A-C** zeigen den Grünling 52 (FIG. 5A), den Pressling 53 (FIG. 5B) und das Bearbeitungssegment 51 (FIG. 5C). Das Bearbeitungssegment 51 ist aus einer Bearbeitungszone **54** und einer Neutralzone **55** aufgebaut. Die Neutralzone 55 ist erforderlich, wenn das Bearbeitungssegment 51 mit dem Grundkörper eines Bearbeitungswerkzeuges verschweißt werden soll und die Kombination aus Matrixwerkstoff und Grundkörper nicht schweißbar ist; bei schweißbaren Kombinationen aus Matrixwerkstoff und Grundkörper kann die Neutralzone 55 entfallen.

Die Bearbeitungszone 54 ist aus einem pulver- oder granulatförmigen ersten Matrixwerkstoff **56** und ersten Hartstoffpartikeln **57,** die gemäß einem definierten ersten Partikelmuster angeordnet sind, aufgebaut und die Neutralzone 55 ist aus einem pulver- oder granulatförmigen zweiten Matrixwerkstoff **59** aufgebaut. Unter dem Begriff "Matrixwerkstoff" werden sämtliche Werkstoffe zum Aufbau von Bearbeitungssegmenten zusammengefasst, in die Hartstoffpartikel eingebettet werden können. Matrixwerkstoffe können aus einem Werkstoff bestehen oder als Gemisch aus verschiedenen Werkstoffen zusammengesetzt sein. Unter dem Begriff "Hartstoffpartikel" werden sämtliche Schneidmittel für Bearbeitungssegmente zusammengefasst; dazu gehören vor allem einzelne Hartstoffpartikel, Verbundteile aus mehreren Hartstoffpartikeln und beschichtete oder gekapselte Hartstoffpartikel.

Das Bearbeitungssegment 51 entspricht vom Aufbau und der Zusammensetzung den Bearbeitungssegmenten 11A, 21A, 21B, 31, 41; das als Bohrring ausgebildete Bearbeitungssegment 11B unterscheidet sich durch seinen ringförmigen Aufbau vom Bearbeitungssegment 51. Die Bearbeitungssegmente können sich in den Abmessungen und in den Krümmungen der Oberflächen voneinander unterscheiden. Der Aufbau der Bearbeitungssegmente wird anhand des Bearbeitungssegmentes 51 erklärt und gilt für die Bearbeitungssegmente 11A, 21A, 21B, 31, 41.

Das Bearbeitungssegment 51 umfasst die ersten Hartstoffpartikel 57, die im ersten Matrixwerkstoff 56 angeordnet sind. Als "erste Hartstoffpartikel" werden die Hartstoffpartikel des Bearbeitungssegmentes 51 bezeichnet, die einen Untergrund bearbeiten, wobei die Anzahl der ersten Hartstoffpartikel 57 und das definierte erste Partikelmuster, gemäß dem die ersten Hartstoffpartikel 57 im ersten Matrixwerkstoff 56 angeordnet sind, an die Anforderungen des Bearbeitungssegmentes 51 angepasst werden. Die ersten Hartstoffpartikel 57 entstammen in der Regel einer Partikelverteilung, die durch einen minimalen Durchmesser, einen maximalen Durchmesser und einen mittleren Durchmesser charakterisiert ist.

Das Bearbeitungssegment 51 wird mit einer Unterseite **61** mit dem Grundkörper des Bearbeitungswerkzeuges verbunden. Bei Bearbeitungssegmenten zum Kernbohren und Bearbeitungssegmenten zum Abtragen ist die Unterseite der Bearbeitungssegmente in der Regel eben ausgebildet, wohingegen die Unterseite bei Bearbeitungssegmenten zum Sägen eine Krümmung aufweist, um die Bearbeitungssegmente an der gekrümmten Stirnfläche der ring- oder scheibenförmigen Grundkörper befestigen zu können. Bei dem in FIG. 5C gezeigten Bearbeitungssegment 51 weisen die ersten Hartstoffpartikel 57 an einer der Unterseite 61 gegenüberliegenden Oberseite **62** einen Überstand Δ gegenüber dem ersten Matrixwerkstoff 56 auf.

Der in FIG. 5A gezeigte Grünling 52 wird stehend aus dem ersten Matrixwerkstoff 56, den ersten Hartstoffpartikeln 57 und dem zweiten Matrixwerkstoff 59 aufgebaut. In einem ersten Schritt wird der zweite Matrixwerkstoff 59 aufgetragen, wobei der zweite Matrixwerkstoff 59 in einer Schicht oder in mehreren Schichten aufgetragen werden kann. In einem zweiten Schritt wird der erste Matrixwerkstoff 56 aufgetragen, wobei der erste Matrixwerkstoff 56 in einer Schicht oder in mehreren Schichten aufgetragen werden kann. In einem dritten Schritt werden die ersten Hartstoffpartikel 57 gemäß dem definierten ersten Partikelmuster im ersten Matrixwerkstoff 56 angeordnet, wobei die ersten Hartstoffpartikel 57 nicht vollständig in den ersten Matrixwerkstoff 56 eingebettet werden, sondern einen Überstand δ gegenüber dem ersten Matrixwerkstoff 56 aufweisen.

Der Grünling 52 wird unter Druckeinwirkung zwischen einem ersten Pressstempel **63,** der die Unterseite 61 formt, und einem zweiten Pressstempel **64,** der die Oberseite 62 formt, verdichtet, bis der Pressling 53 im Wesentlichen die Endgeometrie des Bearbeitungssegmentes 51 aufweist. Als Verfahren, die eine Druckeinwirkung auf den Grünling 52 erzielen, eignen sich beispielsweise Kaltpressverfahren oder Warmpressverfahren. Bei Kaltpressverfahren wird der Grünling 52 ausschließlich einer Druckeinwirkung ausgesetzt, während der Grünling 52 bei Warmpressverfahren neben der Druckeinwirkung einer Temperatureinwirkung bis zu Temperaturen von ca. 200 °C ausgesetzt wird.

Beim Verdichten des Grünlings 52 zum Pressling 53, der in FIG. 5B gezeigt ist, wird zwischen dem zweiten Pressstempel 64 und dem Grünling 52 eine Folie **65** aus einem Folienmaterial **66** angeordnet. Dabei weist das Folienmaterial 66 eine Härte auf, die geringer als die Härte des ersten Matrixwerkstoffes 56 ist. Außerdem wird eine Schichtdicke **d** für die Folie 65 ausgewählt, die grösser als der Überstand der ersten Hartstoffpartikel 57 gegenüber dem ersten Matrixwerkstoff 56 ist. Dadurch, dass die Härte des Folienmaterials 66 geringer als die Härte des ersten Matrixwerkstoffes 56 ist, werden der erste Matrixwerkstoff 56 und das Folienmaterial 66 beim Pressen zwischen dem ersten Pressstempel 63 und zweiten Pressstempel 64 verdichtet und die ersten Hartstoffpartikel 57 behalten ihre Position.

Bei dem in FIG. 5B gezeigten Pressling 53 wird die Folie 65 nach dem Verdichten entfernt und der Pressling 53 wird durch Freiformsintern zum Bearbeitungssegment 51 weiterverarbeitet. Beim Freiformsintern wird der Pressling 53 aufgeheizt, bis die Sintertemperatur **T_{Sinter}** des ersten Matrixwerkstoffes 56 und die Sintertemperatur des zweiten Matrixwerkstoffes 59 erreicht ist, es erfolgt keine weitere Formgebung. Das Bearbeitungssegment 51 hat seine Endgeometrie beim Verdichten des Grünlings 52 mittels des ersten Pressstempels 63 und des zweiten Pressstempels 64 erhalten.

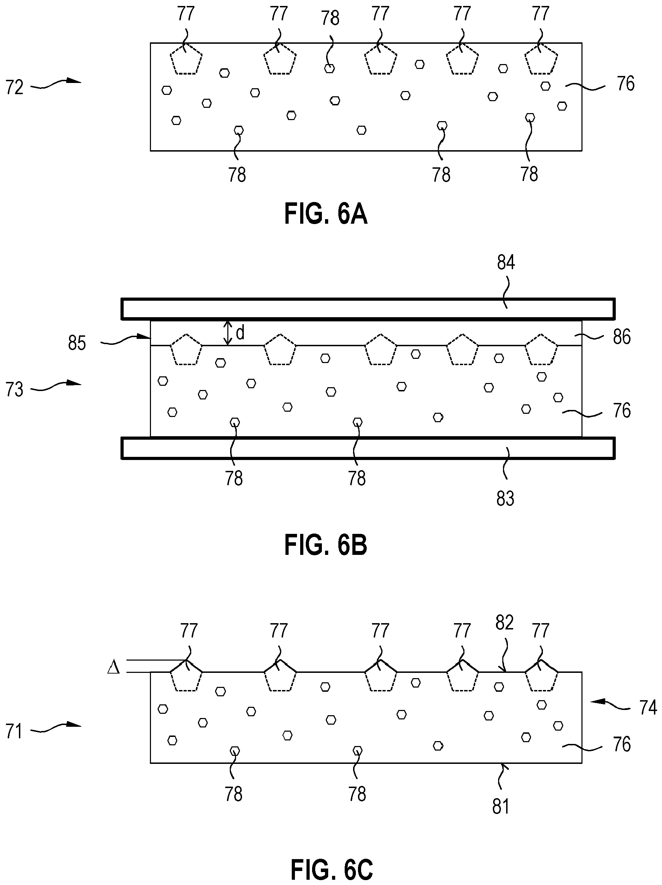

**FIGN. 6A-C** zeigen ein Bearbeitungssegment **71,** das mit einer alternativen Variante des erfindungsgemäßen Verfahrens zur Herstellung eines Bearbeitungssegmentes hergestellt wurde. Die Herstellung des Bearbeitungssegmentes 71 erfolgt in drei Stufen: In einer ersten Stufe wird ein Grünling **72** hergestellt (FIG. 6A), in einer zweiten Stufe wird der Grünling 72 zu einem Pressling **73** verdichtet (FIG. 6B) und in einer dritten Stufe wird der Pressling 73 zum Bearbeitungssegment 71 weiterverarbeitet (FIG. 6C).

Das Bearbeitungssegment 71 unterscheidet sich vom Bearbeitungssegment 51 der FIG. 5C dadurch, dass das Bearbeitungssegment 71 aus einer Bearbeitungszone **74** aufgebaut ist und keine Neutralzone aufweist. Die Bearbeitungszone 74 wird aus einem ersten Matrixwerkstoff **76,** ersten Hartstoffpartikeln **77,** die gemäß einem definierten ersten Partikelmuster angeordnet sind, und zweiten Hartstoffpartikeln **78** aufgebaut. Abhängig von den Verschleißeigenschaften des ersten Matrixwerkstoffes 76 kann es während der Bearbeitung eines Untergrundes durch Reibung zu einem verstärkten Verschleiß des ersten Matrixwerkstoffes 76 an den Seitenflächen des Bearbeitungssegmentes 71 kommen. Dieser Verschleiß kann durch die zweiten Hartstoffpartikel 78 reduziert werden.

Die ersten Hartstoffpartikel 77 und zweiten Hartstoffpartikel 78 entstammen in der Regel Partikelverteilungen, die durch einen minimalen Durchmesser, einen maximalen Durchmesser und einen mittleren Durchmesser charakterisiert sind. Die zweiten Hartstoffpartikel 78 können als statistisch verteilte Partikel dem ersten Matrixwerkstoff 76 beigemischt werden oder die zweiten Hartstoffpartikel 78 werden gemäß einem definierten zweiten Partikelmuster im ersten Matrixwerkstoff 76 angeordnet, wobei die zweiten Hartstoffpartikel 78 insbesondere im Bereich der Seitenflächen des Bearbeitungssegmentes 71 angeordnet werden. Bei dem in FIG. 5C gezeigten Bearbeitungssegment 71 wurden die zweiten Hartstoffpartikel 78 dem ersten Matrixwerkstoff 76 als statistisch verteilte Partikel beigemischt.

Das Bearbeitungssegment 71 wird mit einer Unterseite **81** mit dem Grundkörper des Bearbeitungswerkzeuges verbunden. Bei dem in FIG. 6C gezeigten Bearbeitungssegment 71 sind die ersten Hartstoffpartikel 77 gemäß dem definierten ersten Partikelmuster im ersten Matrixwerkstoff 76 angeordnet und weisen an einer der Unterseite 81 gegenüberliegenden Oberseite **82** einen Überstand Δ gegenüber dem ersten Matrixwerkstoff 76 auf.

Der in FIG. 6A gezeigte Grünling 72 wird stehend aus dem ersten Matrixwerkstoff 76 und den ersten Hartstoffpartikel 77 aufgebaut. In einem ersten Schritt wird der erste Matrixwerkstoff 76 aufgetragen, wobei der erste Matrixwerkstoff 76 in einer Schicht oder in mehreren Schichten aufgetragen werden kann. In einem zweiten Schritt werden die ersten Hartstoffpartikel 77 gemäß dem definierten ersten Partikelmuster im ersten Matrixwerkstoff 76 angeordnet, wobei die ersten Hartstoffpartikel 77 vollständig in den ersten Matrixwerkstoff 76 eingebettet werden.

Der Grünling 72 wird unter Druckeinwirkung zwischen einem ersten Pressstempel **83,** der die Unterseite 81 formt, und einem zweiten Pressstempel **84,** der die Oberseite 82 formt, verdichtet. Beim Verdichten des Grünlings 72 wird zwischen dem zweiten Pressstempel 84 und dem Grünling 72 eine Folie **85** aus einem Folienmaterial **86** mit einer Schichtdicke **d** angeordnet. Dabei weist das Folienmaterial 86 eine Härte auf, die geringer als die Härte des ersten Matrixwerkstoffes 76 ist. Dadurch, dass die Härte des Folienmaterials 86 geringer als die Härte des ersten Matrixwerkstoffes 76 ist, werden der erste Matrixwerkstoff 76 und das Folienmaterial 86 beim Pressen zwischen ersten Pressstempel 83 und zweiten Pressstempel 84 verdichtet und die ersten Hartstoffpartikel 77 behalten ihre Position.

Der Pressling 73 wird durch Freiformsintern oder Heißpressen zum Bearbeitungssegment 71 weiterverarbeitet. Beim Freiformsintern erfolgt eine Temperatureinwirkung auf den Pressling 73 und beim Heißpressen eine Druck- und Temperatureinwirkung. Wenn der Pressling 73 durch Freiformsintern weiterverarbeitet wird, wird der Grünling 72 soweit verdichtet, bis der Pressling 73 im Wesentlichen die Endgeometrie des Bearbeitungssegmentes 71 aufweist. Wenn der Pressling 73 durch Heißpressen weiterverarbeitet wird, erfolgt eine weitere Formgebung des Presslings 73 beim Heißpressen.

Die Eigenschaften des Folienmaterials 86, insbesondere die Schmelztemperatur **T_{Schmelz}** oder der Flammpunkt **T_{Flamm}** des Folienmaterials 86, bestimmen das Verhalten des Folienmaterials 86 beim Sintern. Wenn die Schmelztemperatur T_{Schmelz} des Folienmaterials 86 niedriger als die Sintertemperatur **T_{Sinter}** des ersten Matrixwerkstoffes 76 ist, schmilzt das Folienmaterial 86 beim Aufheizen des Presslings 73, bevor der erste Matrixwerkstoff 76 seine Sintertemperatur T_{Sinter} erreicht hat; das flüssige Folienmaterial 86 verteilt sich während des Sinterprozesses im ersten Matrixwerkstoff 76 und unterstützt den Sintervorgang als Infiltrat. Wenn der Flammpunkt T_{Flamm} des Folienmaterials 86 niedriger als die Sintertemperatur T_{Sinter} des ersten Matrixwerkstoffes 76 ist, verdampft das Folienmaterial 86 beim Aufheizen des Presslings 73, bevor der erste Matrixwerkstoff 76 seine Sintertemperatur T_{Sinter} erreicht hat.

## Patentansprüche

1. Verfahren zur Herstellung eines Bearbeitungssegmentes (11A, 11B; 21A, 21B; 31; 41; 51; 71) für ein Bearbeitungswerkzeug (10A, 10B; 20A, 20B; 30; 40) aus einem pulver- oder granulatförmigen ersten Matrixwerkstoff (56; 76) und ersten Hartstoffpartikeln (57; 77), die gemäß einem definierten ersten Partikelmuster angeordnet werden, wobei das Bearbeitungssegment mit einer Unterseite (61; 81) mit einem Grundkörper (12A, 12B; 22A, 22B; 32; 42) des Bearbeitungswerkzeuges (10A, 10B; 20A, 20B; 30; 40) verbunden wird, mit den Schritten:
▪ ein Grünling (52; 72) wird aus dem ersten Matrixwerkstoff (56; 76) und den ersten Hartstoffpartikeln (57; 77) aufgebaut, wobei die ersten Hartstoffpartikel (57; 77) gemäß dem definierten ersten Partikelmuster im ersten Matrixwerkstoff (56; 76) angeordnet werden,
▪ der Grünling (52; 72) wird unter Druckeinwirkung zwischen einem ersten Pressstempel (63; 83), der die Unterseite (61; 81) des Bearbeitungssegmentes formt, und einem zweiten Pressstempel (64; 84), der eine der Unterseite (61; 81) gegenüber liegende Oberseite (62; 82) des Bearbeitungssegmentes formt, zu einem Pressling (53; 73) verdichtet und
▪ der Pressling (53; 73) wird unter Temperatureinwirkung zum Bearbeitungssegment (51; 71) weiterverarbeitet,
**dadurch gekennzeichnet, dass** beim Verdichten des Grünlings (52; 72) zwischen dem zweiten Pressstempel (64; 84) und dem Grünling (52; 72) eine Folie (65; 85) aus einem Folienmaterial (66; 86) angeordnet wird, wobei das Folienmaterial (66; 82) eine Härte aufweist, die geringer als die Härte des ersten Matrixwerkstoffes (56; 76) ist.

2. Verfahren nach Anspruch 1, **dadurch gekennzeichnet, dass** die ersten Hartstoffpartikel (57) beim Aufbau des Grünlings (52) an der Oberseite (62) mit einem Überstand (δ) gegenüber dem ersten Matrixwerkstoff (56) angeordnet werden.

3. Verfahren nach Anspruch 2, **dadurch gekennzeichnet, dass** für die Folie (65) eine Schichtdicke (d) ausgewählt wird, die grösser als der Überstand (δ) der ersten Hartstoffpartikel (57) gegenüber dem ersten Matrixwerkstoff (56) ist.

4. Verfahren nach Anspruch 1, **dadurch gekennzeichnet, dass** die ersten Hartstoffpartikel (77) beim Aufbau des Grünlings (72) an der Oberseite (82) vollständig in den ersten Matrixwerkstoff (76) eingebettet werden.

5. Verfahren nach einem der Ansprüche 1 bis 4, **dadurch gekennzeichnet, dass** die Folie (65) nach dem Verdichten vom Pressling (53) entfernt wird.

6. Verfahren nach einem der Ansprüche 1 bis 4, **dadurch gekennzeichnet, dass** der Pressling (73) mit der Folie (85) zum Bearbeitungssegment (71) weiterverarbeitet wird.

7. Verfahren nach Anspruch 6, **dadurch gekennzeichnet, dass** die Schmelztemperatur (T_{Schmelz}) des Folienmaterials (86) niedriger als die Sintertemperatur (T_{Sinter}) des ersten Matrixwerkstoffes (76) ist.

8. Verfahren nach Anspruch 6, **dadurch gekennzeichnet, dass** der Flammpunkt (T_{Flamm}) des Folienmaterials (86) niedriger als die Sintertemperatur (T_{Sinter}) des ersten Matrixwerkstoffes (76) ist.
